# EUROPÄISCHE PATENTSCHRIFT

(11) **EP 0 441 264 B1**
(45) Veröffentlichungstag und Bekanntmachung des Hinweises auf die Patenterteilung: **31.08.1994**
(21) Anmeldenummer: 91101375.3
(22) Anmeldetag: 01.02.1991
(51) Int. Cl.: B23H 1/04, B23H 1/06

(54) **Elektrode zur Funkenerosion und Verfahren zur Herstellung einer Elektrode zur Funkenerosion**
Spark erosion electrode and method for manufacturing such an electrode
Electrode d'électron-érosion et méthode de fabrication d'une telle électrode

(30) Priorität: 03.02.1990 DE 4003199
(43) Veröffentlichungstag der Anmeldung: 14.08.1991
(73) Patentinhaber: Fischer, Olaf, D-92660 Neustadt (DE); Legat, Heiner, 92660 Neustadt (DE)
(72) Erfinder: Fischer, Olaf, D-92660 Neustadt (DE); Legat, Heiner, 92660 Neustadt (DE)
(74) Vertreter: von Puttkamer, Nikolaus, Dipl.-Ing. Patentanwälte Haft, von Puttkamer Berngruber, Czybulka

(56) Entgegenhaltungen:
- DE-A- 2 124 505
- PATENT ABSTRACTS OF JAPAN no. 963 (M-78)& JP-A-53 022 692 ( TOKYO SHIBAURA DENKI K.K. ) 2. März 1978
- PATENT ABSTRACTS OF JAPAN vol. 5, no. 111 (C-63)(783) 18.Juli 1981 & JP-A-56 051 543 (MITSUBISHI DENKI K.K.) 9 Mai 1981
- PATENT ABSTRACTS OF JAPAN vol. 4, no. 99 (M-21)(581) 16.Juli 1980 & JP-A-55 058 929 ( TOKYO SHIBAURA DENKI K.K. ) 2. Mai 1980

## Beschreibung

Die Erfindung betrifft eine Elektrode zur Funkenerosion nach dem Oberbegriff des Patentanspruches 1 und ein Verfahren zur Herstellung einer Elektrode zur Funkenerosion nach dem Oberbegriff des Patentanspruches 9.

Bei der Funkenerosion handelt es sich um ein Fertigungsverfahren, das im Werkzeugbau häufig angewendet wird, insbesondere bei der Bearbeitung harter bzw. gehärteter Werkstoffe. Es werden hierbei elektrisch leitende Werkstoffe, in der Regel Metalle, und Werkzeuge als Elektroden in einem Dielektrikum an eine Spannungsquelle mit einem pulsförmigen Spannungsverlauf angeschlossen. Wenn die beiden Elektroden, d.h. also der elektrisch leitende Werkstoff und das Werkzeug bis auf eine sehr kurze Entfernung aneinander angenähert werden, findet eine Ionisierung des Dielektrikums und eine Funkenentladung statt. Diese führt an den Elektrodenoberflächen zu einer Erosion, d.h. zu einem kleinen Krater. Durch die Wahl der Erosionsbedingungen läßt sich eine unterschiedlich starke Erosion der Elektroden und ein gezieltes Abtragen von leitenden Werkstoffen erreichen. Während der vielen zeitlich aufeinanderfolgenden und über die gesamte zu bearbeitende Fläche statistisch verteilten Entladungen arbeitet sich das Werkzeug in das Werkstück ein und gibt diesem die gewünschte, der Form des Werkzeuges entsprechende Form.

Beispielsweise geht ein derartiges Verfahren aus der Druckschrift " DE-Z.F.K. Bender, Einfluß der Funkenerosion auf den Formenbau, erschienen in Werkstatt und Betrieb, 103. Jahrgang (1970), Heft 10, Seiten 797 bis 802 " hervor. Dabei werden als Elektrodenwerkstoffe Wolfram, Wolfram-Kupfer, Kupfer-Chrom, Elektrolytkupfer, Graphit, Messing, Stahl, Aluminium, Zink und Zinklegierungen genannt. Die Herstellung der Elektroden erfolgt spanend durch Drehen, Hobeln, Fräsen und Schleifen, oder durch spanlose Arbeitsverfahren, nämlich durch Pressen oder Gießen, insbesondere nach dem Wachsausschmelzverfahren. Ein Problem aller dieser Herstellungsverfahren besteht darin, daß sie insbesondere bei der Herstellung von feinstrukturierten Elektrodenformen sehr aufwendig sind, so daß die Herstellung solcher Werkzeug-Elektroden sehr zeitraubend und kostenaufwendig ist und rentabel nur dann realisiert werden kann, wenn eine große Zahl entsprechender Produkte hergestellt werden soll.

Als Gießverfahren für feinstrukturierte Elektroden eignen sich das Feingießverfahren und das Schleudergießverfahren. Diese Verfahren werden jedoch, wie dies aus der Druckschrift "DD-Z., H. Meyer, Herstellung von Schmiedegesenkgravuren durch Elektroerosion, erschienen in Fertigungstechnik und Betrieb, 19. Jahrgang, Heft 6, Juni 1969, Seiten 354 bis 358", beschrieben ist, nur in kleinem Umfang angewendet, da sie hohe Fachkenntnisse erfordern.

Aus der DE-OS 21 24 505 geht eine Elektrode zur elektroerosiven Bearbeitung eines Werkstückes hervor, die aus einem in einer Negativform verformten Kupferblechteil besteht, das mit einer Stützmasse durch ein Hintergußverfahren versehen wird. Es liegt auf der Hand, daß ein derartiges Herstellungsverfahren ebenfalls sehr aufwendig ist und die nach ihm hergestellten Elektroden daher vergleichsweise teuer sind.

Ein Problem besteht bei aus Metallen oder Metallegierungen, beispielsweise aus Kupfer hergestellten Elektroden zum funkenerosiven Abtragen darin, daß ihre Lebensdauer relativ begrenzt ist, so daß ein häufiger Wechsel der ohnehin relativ teueren Elektroden nötig ist. Ein Elektrodenwechsel führt jedoch zu Ausfallzeiten der Funkenerosionsanlagen.

Aus den Druckschriften JP-A-53-22692 und JP-A-56-51543 sind Elektroden zur Funkenerosion bekannt, die aus einem leitfähigen Keramikmaterial bestehen. Ein Problem solcher Elektroden kann darin bestehen, daß infolge des hohen Gesamtwiderstandes ein einwandfreies Funktionieren nicht immer gewährleistet ist.

Die Aufgabe der vorliegenden Erfindung besteht darin, eine aus einem leitfähigen Keramikmaterial bestehende Elektrode zum funkenerosiven Abtragen dahingehend zu verbessern, daß ein einwandfreies Funktionieren gewährleistet ist und ein Verfahren zur Herstellung einer solchen Elektrode anzugeben.

Diese Aufgabe wird durch eine Elektrode der eingangs genannten Art, die durch die in dem kennzeichnenden Teil des Patentanspruches 1 angegebenen Merkmale gekennzeichnet ist sowie durch ein Verfahren der eingangs genannten Art gelöst, das durch die in dem Kennzeichen des Patentanspruches 9 angegebenen Merkmale gekennzeichnet ist.

Der wesentliche Vorteil der erfindungsgemäßen Elektrode besteht darin, daß sie in einem inneren Hohlraum einen aus einem Metall oder einer Metallegierung bestehenden Kernbereich aufweist, der im Vergleich zum Elektrodenmaterial eine höhere elektrische Leitfähigkeit besitzt und durch den erreicht wird, daß der Gesamtwiderstand aufgrund des relativ geringen Abstandes von der Elektrodenoberfläche zu dem gut leitfähigen Kernbereich der Elektrode so niedrig gehalten werden kann, daß ein einwandfreies Funktionieren gewährleistet ist.

Vorteilhafterweise können die erfindungsgemäßen Elektroden zum funkenerosiven Abtragen dadurch hergestellt werden, daß in einer aus einem porösen Material bestehenden Negativform durch Scherbenbildung eine Elektrode nach dem Vollgußverfahren, dem Hohlgußverfahren oder einer Kombination dieser Verfahren hergestellt wird. Dabei erfolgt die Scherbenbildung dadurch, daß dem in die Negativform eingegossenen, Keramikmaterial zur Verfestigung Flüssigkeit entzogen wird. Vorteilhafterweise ist die Negativform in einer äußerst einfachen Weise durch einen Abguß von einer Originalelektrode, beispielsweise aus Gips oder Kunststoff herstellbar.

Vorteilhafterweise können in der Negativform beliebig viele vorliegende Elektroden hergestellt werden, wobei kein Nacharbeiten erforderlich sind. Dies bedeutet, daß mühsame mechanische Formgebungsprozesse, wie sie bei den eingangs genannten bekannten Metall- oder Metallegierungselektroden erforderlich sind, entfallen. Auch die vergleichsweise aufwendigen Gießverfahren des Standes der Technik sind bei der Erfindung nicht erforderlich. Dies hat zur Folge, daß nach der Erfindung, insbesondere wegen der einfachen Herstellung der Negativform auch Einzelstücke von Elektroden mit einem vertretbaren Kostenaufwand herstellbar sind.

Vorteilhafterweise besitzen die erfindungsgemäßen Elektroden zum funkenerosiven Abtragen eine vergleichsweise sehr hohe Lebensdauer. Dies ist darauf zurückzuführen, daß die zur Elektrodenherstellung verwendeten Keramikmaterialien eine hohe Temperaturbeständigkeit besitzen. Während beispielsweise das zur Herstellung der bekannten Elektroden verwendet Kupfer bei etwa 1500 °C verbrennt, schmelzen die zur Herstellung der erfindungsgemäßen Elektroden verwendbaren Keramikmaterialien z.B. erst bei etwa 2500 °C. Diese hohe Temperaturbeständigkeit führt auch dazu, daß zur Funkenerosion sehr viel höhere Spannungen angewendet werden können, ohne daß die Lebensdauer kleiner wird als diejenige der bekannten Kupferlektroden. Beim Einsatz höherer Spannungen kann schneller erodiert werden.

Bei einer bevorzugten Ausgestaltung der Erfindung wird mit dem Ausgießen des inneren Hohlraumes eine Halteeinrichtung zur Befestigung der Elektrode an der Vorschubeinrichtung einer Funkenerosionseinrichtung hergestellt.

Bevorzugt wird als Keramikmaterial Siliciumcarbid (SiC) verwendet, da sich dieses keramische Material durch eine hohe Festigkeit und die bereits genannte Temperaturbeständigkeit auszeichnet. Besonders bevorzugt wird als Keramikmaterial infiltriertes SiC verwendet. Eine derartige Elektrode weist eine Temperaturbeständigkeit auf, die bis zu etwa 4500 °C reicht.

Zur Erhöhung der elektrischen Leitfähigkeit oder Duktilität des Elektrodenmaterials kann dieses gegebenenfalls mit einem Zusatz aus Metallpulver oder einem Metallegierungspulver versetzt werden. Mit einer vorteilhaften Erhöhung der elektrischen Leitfähigkeit geht auch eine Verbesserung der Wärmeleitfähigkeit einher, so daß eine bessere Wärmeverteilung erreicht und damit eine lokale Überhitzung vermieden wird. Eine derartige lokale Überhitzung kann zur Ausbildung starker Temperaturgradienten und damit zur Spannungen führen, welche ein Zerspringen der Elektrode bewirken könnte.

Weitere vorteilhafte Ausgestaltungen der Erfindung gehen aus Unteransprüchen hervor.

Im folgenden werden die Erfindung und deren Ausgestaltungen im Zusammenhang mit den Figuren näher erläutert. Es zeigen:
- Figuren 1 bis 9: die Herstellung einer vorliegenden Elektrode nach dem Hohlgußverfahren;
- Figuren 10 bis 16: die Herstellung einer vorliegenden Elektrode nach dem Vollgußverfahren und
- Figuren 17 bis 24: die Herstellung einer vorliegenden Elektrode nach einer Kombination eines Hohlguß- und eines Vollgußverfahrens.

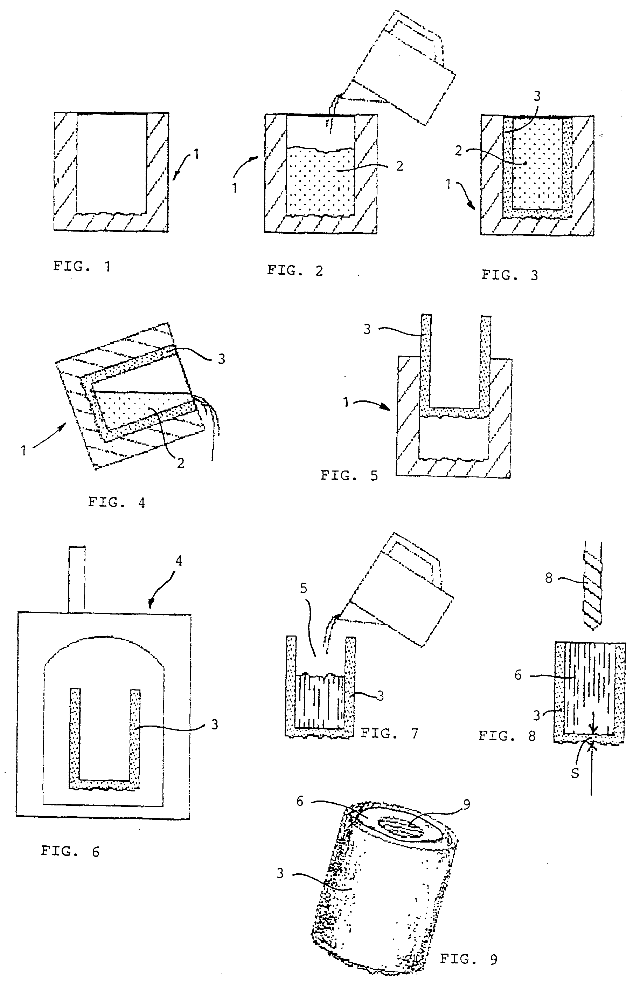

Im folgenden wird im Zusammenhang mit den Figuren 1 bis 9 die Herstellung einer Elektrode nach dem Hohlgußverfahren näher erläutert.

Figur 1 zeigt die Negativform 1, die vorzugsweise an einer Originalelektrode oder einem Modell hergestellt wurde. Diese Negativform besteht aus einem porösen Material.

Gemäß Figur 2 wird in die Negativform 1 das Elektrodenmaterial 2 eingegossen. Beispielsweise handelt es sich bei diesem Elektrodenmaterial um ein wässriges Siliciumcarbid. Wie dies aus der Figur 3 ersichtlich ist, bildet sich aufgrund der Porösität der Form 1 aus dem Material 2 ein Scherben 3 entlang der inneren Oberfläche der Form 1. Die Scherbenbildung erfolgt durch Absetzen von SiC-Material an der genannten inneren Oberfläche und durch Wasserentzug aus der abgesetzten Schicht infolge der Porösität des Materials der Form 1. Dabei wird die Dicke des gebildeten Scherbens 3 durch die Zeit bestimmt, während der das Elektrodenmaterial 2 in der Form 1 verbleibt. Beispielsweise wird eine Dicke von etwa 4 mm erreicht, wenn das Elektrodenmaterial 20 bis 25 Minuten in der Form 1 verbleibt.

Gemäß Figur 4 wird das überschüssige Elektrodenmaterial 2 nach Erreichen der gewünschten Dicke des Scherbens 3 aus der Form 1 ausgegossen.

Der die Elektrode bildende Scherben 3 kann aus der Form 1 entformt werden, wenn er eine ausreichend große Festigkeit aufweist. Aus diesem Grunde wird er nach dem Ausgießen des Elektrodenmaterials 2 gemäß Figur 4 , beispielsweise etwa 5 Minuten lang getrocknet.

Der gemäß Figur 5 aus der Form 1 herausgenommene Scherben 3 wird in einem Brennofen 4 gebrannt (Fig. 6). Zum zu Verhindern, daß der Scherben 3 beschädigt wird, wenn ihm während der Brennoperation zuviel Wasser entzogen wird, wird er vor dem Einbringen in den Brennofen 4 gründlich getrocknet.

Nach dem Brennen wird in den inneren Hohlraum 5 des Scherbens 3 ein Metall , bei dem es sich beispielsweise um Zinn handelt, oder eine Metallegierung eingegossen (Figur 7). Nach dem Verfestigen des Metalles bzw. der Metallegierung entsteht im Inneren des Scherbens 3 ein Kernbereich 6 (Figur 8), der zu den folgenden Vorteilen führt.
1. Der aus Metall oder einer Metallegierung bestehende Kernbereich weist eine hohe Leitfähigkeit auf, wobei zwischen dem zu bearbeitenden Werkstück und dem Kernbereich 6 lediglich eine dünne Schicht S des Elektrodenmaterials vorliegt, so daß die Gesamtleitfähigkeit der Elektrode sehr groß ist.
2. In den Kernbereich 6 kann eine Befestigungseinrichtung eingebracht werden, mit deren Hilfe die Elektrode an der Erosionseinrichtung befestigbar ist. Beispielsweise kann mit der Hilfe eine Bohrers 8 ein Loch 9 in den Kernbereich 6 des Scherbens 3 eingebohrt werden, wobei dieses Loch 9 mit einem Innengewinde versehen werden kann, das zur genannten Befestigung dient (Figur 9). Es ist auch denkbar, beim Gießen des Kernbereiches 6 eine geeignete Halteeinrichtung einzubetten. Eine derartige Halteeinrichtung 9' ist in der Figur 8 schematisch durch unterbrochene Linien dargestellt. Beispielsweise besteht der Kernbereich aus Zinn.

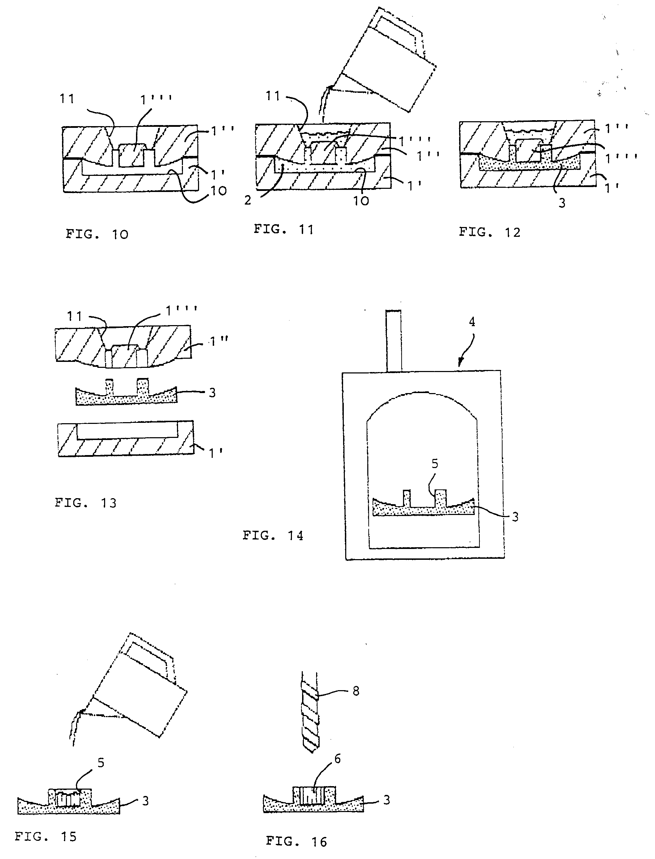

Die Figuren 10 bis 16 zeigen die Herstellung einer Elektrode nach dem Vollgußverfahren.

Die Figur 10 zeigt beispielhaft eine bei diesem Verfahren verwendete Form. Diese besteht aus wenigstens zwei Formteilen, die zusammen den Hohlraum bilden, in dem das Elektrodenmaterial einzugießen ist. Im vorliegenden Beispiel besteht die Form aus einem unteren Formteil 1' und einem oberen Formteil 1'', die den Hohlraum 10 bilden. Das obere Formteil 1'' weist gemäß Figur 10 einen Formbereich 1''' auf, der in der hergestellten Elektrode einen Hohlraum 5 bildet, in den bevorzugterweise ein Kernbereich aus Metall oder einer Metallegierung erzeugt wird.

Das obere Formteil 1'' weist ein Eingußtrichter 11 auf, in den das flüssige Elektrodenmaterial gemäß Figur 11 eingegossen wird, so daß es den Hohlraum 10 ausfüllt.

Gemäß Figur 12 erfolgt aufgrund der Porösität des Materials der Formteile 1' und 1'' sowie des Formbereiches 1''' die Bildung eines Scherbens 3, da dem in dem Hohlraum 10 befindlichen Elektrodenmaterial Flüssigkeit entzogen wird.

Wie dies in der Figur 13 dargestellt ist, erfolgt das Entformen des Scherbens 3 durch Trennen der Formteile 1' und 1'' voneinander.

Gemäß Figur 14 wird der hergestellte Scherben in einem Brennofen 4 gebrannt. Nach dem Brennen wird gemäß Figur 15 in dem Hohlraum 5 des Scherbens 3 durch Eingießen eines Metalles oder einer Metallegierung der Kernbereich 6 erzeugt, der in der im Zusammenhang mit den Figuren 7 bis 9 beschriebenen Weise mit einer Befestigungseinrichtung versehen werden kann und zu den genannten Vorteilen führt.

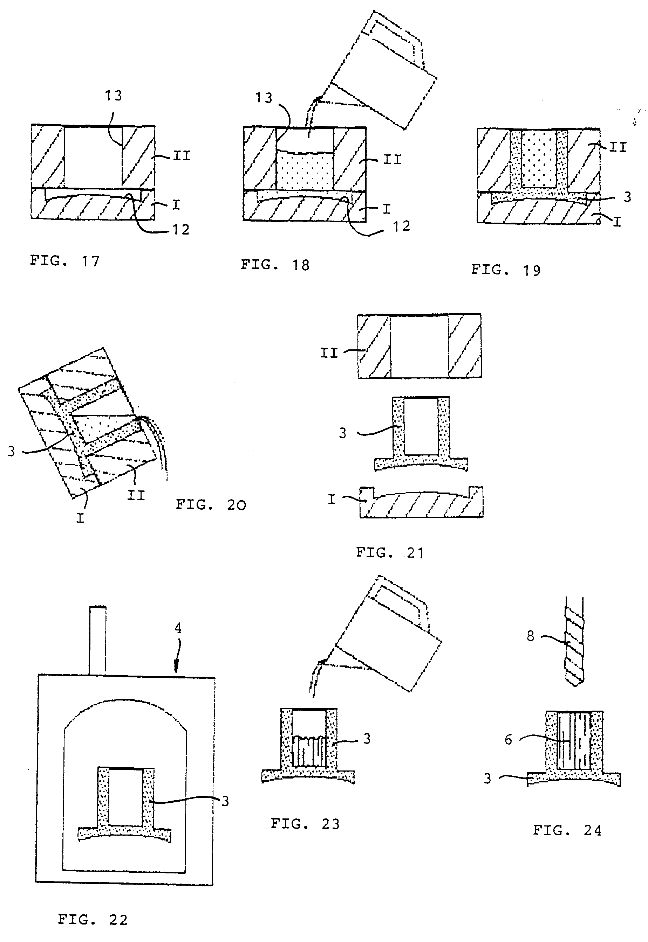

Schließlich wird im Zusammenhang mit den Figuren 17 bis 24 die Herstellung einer Funkenerosionselektrode nach einem Gießverfahren erläutert, das eine Kombination eines Hohlgußverfahrens und eines Vollgußverfahrens darstellt.

In der aus der Figur 17 ersichtlichen Weise besteht die Negativform 1 aus einem unteren Formteil I, in dessen Hohlraum 12 das Vollgußverfahren ausgeführt wird, und einem oberen Formteil II, in dessen Hohlraum 13 gleichzeitig das Hohlgußverfahren ausgeführt wird, wobei die Hohlräume 12 und 13 miteinander in Verbindung stehen.

Das flüssige Elektrodenmaterial wird gemäß Figur 18 in die Form 1 eingegossen, so daß es den Hohlraum 12 vollständig und den darüber angeordneten Hohlraum 13 wenigstens teilweise ausfüllt.

Aufgrund der Porösität des Materials der Negativform 1 erfolgt sowohl im Hohlraum 12 als auch im Hohlraum 13 die Bildung eines Scherbens 3 derart, daß der gesamte Hohlraum 12 ausgefüllt wird und daß an der Innenwandung des Hohlraumes 13 Elektrodenmaterial abgesetzt wird, das einstückig in das Material des im Hohlraum 12 gebildeten Scherbens übergeht. Es wird darauf hingewiesen, daß sich das im Hohlraum 12 befindliche Material schneller absetzt, weil ihm in den Bereichen, in denen es allseitig von den Formteilen I und II umschlossen ist, nach allen Seiten Flüssigkeit entzogen wird. Es kann daher ohne weiteres erreicht werden, daß der Scherben 3 im Bereich des Hohlraumes 12 wie auch an den Innenwandungen des Formteiles II etwa dieselbe Dicke aufweist (Figur 19).

Gemäß Figur 20 wird das überschüssige Elektrodenmaterial aus der Form 1 ausgegossen, wenn der Scherben 3 an der Innenwandung des Formteiles II die geforderte Dicke aufweist.

Die Entformung erfolgt gemäß Figur 21 durch Auseinandernahme der Formteile I und II. Schließlich erfolgt in der im Zusammenhang mit dem Vollgußverfahren und dem Hohlgußverfahren bereits beschriebenen Weise gemäß den Figuren 22 bis 24 das Brennen im Brennofen 4 und die Erzeugung eines Kernbereiches 6 im Hohlraum 5 sowie die Weiterbehandlung dieses Kernbereiches 6.

Im folgenden wird näher auf die Materialien der Negativform 1 und auf das Elektrodenmaterial eingegangen.

Wie dies bereits festgestellt wurde, ist es für die Herstellung des Scherbens 3 der Elektrode von Bedeutung, daß das Material der Form 1 saugfähig ist, so daß es dazu in der Lage ist, dem in seinen Hohlraum eingegossenen flüssigen Elektrodenmaterial (Gießschlicker) Flüssigkeit zu entziehen, so daß sich ein Teil des Elektrodenmaterials zu dem Scherben 3 verfestigen kann. Soweit es diese Voraussetzung erfüllt, ist zur Bildung der Form 1 jedes beliebige Material geeignet. Beispielsweise handelt es sich bei dem Material für die Form 1 um Gips oder Kunststoff, wobei Teilbereiche dieser Form auch Kautschukeinsätze aufweisen können. Insbesondere ist es von Bedeutung, daß aus diesem Material zur Herstellung der Negativform 1 ein einfacher Abguß von einer Originalelektrode oder einem Modell abgenommen werden kann.

An das Elektrodenmaterial sind die folgenden Anforderungen zu stellen:
1) Es muß eine bestimmte elektrische Leitfähigkeit aufweisen, damit die Funkenerosion mit den aus ihm hergestellten Elektroden durchführbar ist.
2) Es sollte eine möglichst hohe Temperaturbeständigkeit besitzen, so daß die Lebensdauer der Elektrode möglichst hoch ist bzw. daß eine hohe Betriebsspannung möglich ist.
3) Es muß in flüssiger Form als sogenannter Gießschlicker vorliegen, so daß es in die Negativform 1 eingießbar ist, und muß zur Scherbenbildung, d.h. also zur Verfestigung durch Flüssigkeitsentzug durch das poröse Material der Negativform 1 geeignet sein.

Als Elektrodenmaterial werden leitfähige Keramikmaterialien verwendet, die eine hohe Temperaturbeständigkeit aufweisen. Wenn ein Keramikmaterial keine ausreichend große Leitfähigkeit besitzt, kann ihm Material zur Erhöhung der Leitfähigkeit zugemischt werden. Beispielsweise kann einem Keramikmaterial pulverisiertes Metall- oder Metallegierungsmaterial zugemischt werden. Dabei ist jedoch zu beachten, daß durch die Zumischung des Materials die Temperaturbeständigkeit erniedrigt wird, wenn das zugemischte Material einen zu niedrigen Schmelzpunkt aufweist.

Vorzugsweise wird als Ausgangsmaterial leitfähiges Siliziumcarbid (SiC) in einer Schlickerform verwendet, dem gegebenenfalls zur Erhöhung der Leitfähigkeit als Metall- oder Metallegierungspulver Kupfermehl zugemischt werden kann. SiC dissoziert bei einer Temperatur von ca. 2300 °C.

Da bislang aus Kupfer hergestellte Elektroden bei etwa 1200 °C schmelzen bzw. verbrennen, ist bei der Anwendung dieser Elektroden ein häufiger Elektrodenwechsel nötig. Dies führt aber zu einem hohen Verbrauch der nur aufwendig herstellbaren Kupferlektroden und zu häufigen Ausfallzeiten der Erosionsanlagen beim Elektrodenwechsel. Durch beide Faktoren werden hohe Kosten verursacht. Bei der Verwendung der vorliegenden Kermiakelektroden, die erst bei relativ hohen Temperaturen schmelzen bzw. verdampfen, ist die Lebensdauer wesentlich größer. Zudem kann mit wesentlich höheren Spannungen sehr schnell erodiert werden, ohne daß die Lebensdauer kleiner wird als diejenige bekannter Kupferelektroden.

Insbesondere wird als Ausgangsmaterial infiltriertes SiC verwendet, das erst bei etwa 4500 °C dissoziert. Dieses Si-infiltrierte oder reaktionsgebundene SiC ist ein Verbundstoff aus SiC (ca. 85 - 90 Gew.-%) und metallischem Si (ca. 10 bis 15 Gew.-%). Dieses Material, das bisher nur für andere Anwendungsfälle verwendet wurde, ist beispielsweise in "ESK-Mitteilung, Siliziumcarbid, der Firma Elektroschmelz-Werk Kempten GmbH", näher erläutert. Dort ist auch das oben erwähnte SiC beschrieben.

Weitere beispielhafte Keramikmaterialien sind:
SiC + Al₂O₃, Al₂O₃ + Ton, Al₂O₃ + Vollspat und Al₂O₃ + Kaolin.

## Patentansprüche

1. Elektrode zur Funkenerosion, die aus einem leitfähigen Keramikmaterial (2) besteht, dadurch gekennzeichnet, daß die Elektrode zur Erhöhung der Gesamtleitfähigkeit in einem Hohlraum im Keramikmaterial (2) einen Kernbereich (6) aufweist, der aus einem Metall oder einer Metallegierung besteht.

2. Elektrode nach Anspruch 1, dadurch gekennzeichnet, daß als Metall Zinn verwendet ist.

3. Elektrode nach Anspruch 1 oder 2, dadurch gekennzeichnet, daß der Kernbereich (6) eine Befestigungseinrichtung zur Befestigung der Elektrode (3) an einer Erosionseinrichtung aufweist.

4. Elektrode nach Anspruch 3, dadurch gekennzeichnet, daß die Befestigungseinrichtung die Form einer in den Kernbereich (6) eingebrachten Bohrung (9) mit einem Innengewinde aufweist.

5. Elektrode nach Anspruch 3, dadurch gekennzeichnet, daß die Befestigungseinrichtung die Form einer in den Kernbereich (6) beim Guß desselben eingebetteten Halteeinrichtung aufweist.

6. Elektrode nach einem der Ansprüche 1 bis 5, dadurch gekennzeichnet, daß dem Keramikmaterial (2) zur Erhöhung der Leitfähigkeit ein pulverförmiges Metall oder eine pulverförmige Metallegierung zugemisch ist.

7. Elektrode nach einem der Ansprüche 1 bis 6, dadurch gekennzeichnet, daß das Keramikmaterial Siliciumcarbid ist.

8. Elektrode nach einem der Ansprüche 1 bis 6, dadurch gekennzeichnet, daß das Keramikmaterial infiltriertes Siliciumcarbid ist.

9. Verfahren zur Herstellung einer Elektrode zur Funkenerosion nach einem der Ansprüche 1 bis 8, dadurch gekennzeichnet, daß in eine Negativform (1; 1', , 1''; I, II), die aus einem porösen Material besteht, das mit einer Flüssigkeit versetzte pulverförmige Keramikmaterial (2) derart eingegossen wird, daß sich an der Innenwandung der Negativform (1) durch Flüssigkeitsentzug ein Scherben (3) ausbildet und daß der Scherben (3) in einem Brennofen (4) gebrannt wird und daß in den Hohlraum (5) des Scherbens zur Bildung des Kernbereiches (6) das flüssige Metall oder die flüssige Metallegierung eingegossen wird.

10. Verfahren nach Anspruch 9, dadurch gekennzeichnet, daß nach dem Hohlgußverfahren gearbeitet wird und daß nach der Ausbildung des Scherbens (3) einer gewünschten Dicke das überschüssige Keramikmaterial abgegossen wird.

11. Verfahren nach Anspruch 9, dadurch gekennzeichnet, daß nach dem Vollgußverfahren gearbeitet wird, bei dem der Scherben (3) in einem ihm entsprechenden Formhohlraum (10) gebildet wird, der durch mehrere Formteile (1, 1'', 1''') umschlossen wird und daß ein Formteil (1'') einen Formbereich (1''') aufweist, der in dem Scherben (3) einen Hohlraum (5) zur Herstellung des Kernbereiches (6) erzeugt, in den das flüssige Metall oder die flüssige Metallegierung eingegossen wird.

12. Verfahren nach Anspruch 9, dadurch gekennzeichnet, daß nach einer Kombination des Hohl- und Vollgußverfahrens gearbeitet wird, bei der ein erstes Formteil (I) und ein zweites Formteil (II) einen ersten Formhohlraum (12) zur Ausführung des Vollgußverfahrens sowie einen zweiten Formhohlraum (13) zur Ausführung des Hohlgußverfahrens derart bilden, daß der erste Formhohlraum (12) und der zweite Formhohlraum (13) miteinander in Verbindung stehen und daß der zweite Formhohlraum (13) über dem ersten Formhohlraum (12) angeordnet ist, daß das Keramikmaterial in den zweiten Formhohlraum (13) eingegossen wird, so daß dies den ersten Formhohlraum (12) vollständis und den zweiten Formhohlraum (13) wenigstens teilweise ausfüllt und daß nach Scherbenbildung im ersten Formhohlraum (12) und im zweiten Formhohlraum (13) das überschüssige Keramikmaterial aus dem Inneren des im zweiten Formhohlraum (13) ausgebildeten Scherbenteiles ausgegossen wird und daß zur Bildung des Kernbereiches (6) in den Hohlraum des im zweiten Formteil (II) gebildeten Scherbenteiles das flüssige Metall oder die flüssige Metallegierung eingegossen wird.

13. Verfahren nach einem der Ansprüche 9 bis 12, dadurch gekennzeichnet, daß der Scherben (3) vor der Entnahme aus der Negativform (1; 1', 1''; I, II) zur Verfestigung getrocknet wird.

14. Verfahren nach einem der Ansprüche 10 bis 13, dadurch gekennzeichnet, daß der aus der Form (1; 1', 1''; I, II) herausgenommene Scherben (3) vor dem Einbringen in den Brennofen (4) zum Flüssigkeitsentzug getrocknet wird.

15. Verfahren nach einem der Ansprüche 9 bis 14, dadurch gekennzeichnet, daß zur Herstellung einer Befestigungseinrichtung zur Befestigung der Elektrode an einer Funkenerosionseinrichtung in den Kernbereich (6) eine Bohrung eingebracht und diese Bohrung mit einem Innengewinde versehen wird.

16. Verfahren nach einem der Ansprüche 9 bis 14, dadurch gekennzeichnet, daß zur Herstellung einer Befestigungseinrichtung zur Befestigung der Elektrode an einer Funkenerosionseinrichtung beim Eingießen des flüssigen Metalles oder der flüssigen Metallegierung in den Hohlraum (5) des Scherbens (4) eine Halteeinrichtung in den Kernbereich (6) eingebettet wird.

## Claims

1. An electrode for electrical discharge machining made from a conductive ceramic material (2),
**characterised in that** to raise the total conductivity in a cavity in the ceramic material the electrode comprises a core region (6) made from a metal or a metal alloy.

2. An electrode according to Claim 1,
**characterised in that** tin is used as the metal.

3. An electrode according to Claim 1 or 2,
**characterised in that** the core region (6) comprises an attachment device for attaching the electrode (3) to an erosion device.

4. An electrode according to Claim 3,
**characterised in that** the attachment device takes the form of a bore (9) having an internal thread made in the core region (6).

5. An electrode according to Claim 3,
**characterised in that** the attachment device takes the form of a retention device embedded in the core region (6) when said core region is cast.

6. An electrode according to one of Claims 1 to 5,
**characterised in that** a powdery metal or a powdery metal alloy is added to the ceramic material (2) by mixing to increase the conductivity.

7. An electrode according to one of Claims 1 to 6,
**characterised in that** the ceramic material is silicon carbide.

8. An electrode according to one of Claims 1 to 6,
**characterised in that** the ceramic material is infiltrated silicon carbide.

9. A process for manufacturing an electrode for electrical discharge machining according to one of Claims 1 to 8,
**characterised in that** the powdery ceramic material (2) mixed with a liquid is poured into a negative mould (1; 1', 1'', I, II) made from a porous material so that a body (3) is formed on the inner wall of the negative mould (1) by liquid extraction, **and in that** the body (3) is fired in a kiln (4) , **and in that** the liquid metal or the liquid metal alloy is poured into the cavity (5) of the body to form the core region (6).

10. A process according to Claim 9,
**characterised in that** the hollow casting process is used,
**and in that** after the formation of the body (3) of a desired thickness the excess ceramic material is poured off.

11. A process according to Claim 9,
**characterised in that** the full casting process is used, in which the body (3) is formed in a mould cavity (10) corresponding thereto, which is surrounded by several mould parts (1, 1'', 1'''), **and in that** a mould part (1'') has a mould region (1''') which in the body (3) produces a cavity (5) for producing the core region (6) into which the liquid metal or the liquid metal alloy is poured.

12. A process according to Claim 9,
**characterised in that** a combination of the hollow casting and full casting processes is used, in which a first mould part (I) and a second mould part (II) form a first mould cavity (12) to perform the full casting process and also a second mould cavity (13) to perform the hollow casting process so that the first mould cavity (12) and the second mould cavity (13) communicate with one another,
**and in that** the second mould cavity (13) is disposed over the first mould cavity (12),
**in that** the ceramic material is poured into the second mould cavity (13) so that this completely fills the first mould cavity (12) and at least partially fills the second mould cavity (13),
**and in that** after the formation of the body in the first mould cavity (12) and in the second mould cavity (13) the excess ceramic material is poured out of the interior of the body part formed in the second mould cavity (13),
**and in that** to form the core region (6) the liquid metal or the liquid metal alloy is poured into the cavity of the body part formed in the second mould part (II).

13. A process according to one of Claims 9 to 12,
**characterised in that** the body (3) is dried for hardening purposes before being removed from the negative mould (1; 1', 1''; I, II).

14. A process according to one of Claims 10 to 13,
**characterised in that** the body (3) removed from the mould (1; 1', 1''; I, II) is dried before being introduced into the kiln (4) for liquid extraction.

15. A process according to one of Claims 9 to 14,
**characterised in that** to manufacture an attachment device to attach the electrode to an electrical discharge machining device a bore is made in the core region (6) and this bore is provided with an internal thread.

16. A process according to one of Claims 9 to 14,
**characterised in that** to produce an attachment device to attach the electrode to an electrical discharge machining device when pouring the liquid metal or the liquid metal alloy into the cavity (5) of the body (4) a retention device is embedded in the core region.

## Revendications

1. Electrode pour usinage par électro-érosion composée d'un matériau céramique (2) électro-conducteur, caractérisée par le fait qu'aux fins d'augmenter la conductibilité totale, l'électrode comporte une partie âme (6) située dans une cavité en matériau céramique (2), laquelle partie âme est réalisée en un métal ou en un alliage métallique.

2. Electrode selon la revendication 1, caractérisée par le fait que l'on utilise de l'étain comme métal.

3. Electrode selon la revendication 1 ou 2, caractérisée par le fait que la partie âme (6) présente un dispositif de fixation pour la fixation de l'électrode (3) sur un dispositif d'usinage par électro-érosion.

4. Electrode selon la revendication 3, caractérisée par le fait que le dispositif de fixation se présente sous la forme d'un perçage (9) aménagé dans la partie âme (6) et pourvu d'un filetage intérieur.

5. Electrode selon la revendication 3, caractérisée par le fait que le dispositif de fixation se présente sous la forme d'un moyen de retenue noyé dans la partie âme (6) lors du moulage de celle-ci.

6. Electrode selon l'une des revendications 1 à 5, caractérisée par le fait que pour augmenter la conductibilité, un métal à l'état de poudre ou un alliage métallique à l'état de poudre est incorporé dans le matériau céramique (2).

7. Electrode selon l'une des revendications 1 à 6, caractérisée par le fait que le matériau céramique (2) est du carbure de silicium.

8. Electrode selon l'une des revendications 1 à 6, caractérisée par le fait que le matériau céramique (2) est du carbure de silicium infiltré.

9. Procédé de fabrication d'une électrode pour l'usinage par électro-érosion selon l'une des revendications 1 à 8, caractérisé par le fait que dans un moule négatif (1; 1', 1''; I, II) constitué d'un matériau poreux on coule le matériau céramique (2) sous forme de poudre à laquelle on a ajouté un liquide de telle sorte que, par absorption de liquide, il se forme sur la paroi intérieure du moule négatif (1) une ébauche en pâte (3) par le fait que l'on cuit l'ébauche en pâte (3) dans un four de cuisson (4) et par le fait que, pour former la partie âme (6), on coule le métal liquide ou l'alliage métallique liquide dans la cavité (5) de l'ébauche en pâte.

10. Procédé selon la revendication 9, caractérisé par le fait que l'on utilise le procédé de moulage creux et par le fait qu'une fois obtenue l'ébauche en pâte (3) avec l'épaisseur souhaitée, on vide le matériau céramique en excédent.

11. Procédé selon la revendication 9, caractérisé par le fait que l'on utilise le procédé de moulage plein dans lequel l'ébauche en pâte (3) est formée dans une chambre de moule (10) adaptée qui est entourée de plusieurs parties de moule (1, 1'', 1''') et par le fait qu'une partie de moule (1'') présente une zone 1''') qui produit dans l'ébauche en pâte (3) une cavité (5) pour former la partie âme (6) dans laquelle on coule ensuite le métal liquide ou l'alliage métallique liquide.

12. Procédé selon la revendication 9, caractérisé par le fait que l'on utilise une combinaison du procédé de moulage creux et du procédé de moulage plein dans laquelle une première partie de moule (I) et une deuxième partie de moule (II) forment une première chambre de moule (12) pour la mise en oeuvre du procédé de moulage plein et une deuxième chambre de moule (13) pour la mise en oeuvre du procédé de moulage creux telles que la première chambre de moule (12) et la deuxième chambre de moule (13) communiquent entre elles et que la deuxième chambre de moule (13) est disposée au-dessus de la première chambre de moule (12), par le fait que l'on coule le matériau céramique dans la deuxième chambre de moule (13) de telle sorte que celui-ci remplissent entièrement la première chambre de moule (12) et au moins partiellement la deuxième chambre de moule (13), par le fait qu'après la formation de l'ébauche en pâte dans la première chambre de moule (12) et la deuxième chambre de moule (13) on vide le matériau céramique qui est en excédent dans la partie d'ébauche en pâte formée à l'intérieur de la deuxième chambre de moule (13) et par le fait que pour former la partie âme (6) on coule le métal liquide ou l'alliage métallique liquide dans la cavité de l'ébauche en pâte formée dans la deuxième partie de moule (II).

13. Procédé selon l'une des revendications 9 à 12, caractérisé par le fait qu'afin de la rendre plus solide, on sèche l'ébauche en pâte (3) avant de la retirer du moule négatif (1; 1', 1''; I, II).

14. Procédé selon l'une des revendications 10 à 13 caractérisé par le fait qu'avant de l'introduire dans le four de cuisson (4) on sèche par soutirage du liquide l'ébauche en pâte (3) sortie du moule (1; 1', 1''; I, II).

15. Procédé selon l'une des revendications 9 à 14, caractérisé par le fait que pour réaliser un dispositif de fixation pour la fixation de l'électrode dans un système d'usinage par électro-érosion, on aménage un perçage dans la partie âme (6) et on munit ledit perçage d'un filetage intérieur.

16. Procédé selon l'une des revendications 9 à 14, caractérisé par le fait que pour réaliser un dispositif de fixation pour la fixation de l'électrode dans un système d'usinage par électro-érosion, on noie un moyen de retenue dans la partie âme (6) au moment de la coulée du métal liquide ou de l'alliage métallique liquide dans la cavité (5) de l'ébauche en pâte (3).
